# EUROPEAN PATENT SPECIFICATION

(11) **EP 0 556 948 B1**
(45) Date of publication and mention of the grant of the patent: **18.09.1996**
(21) Application number: 93300224.8
(22) Date of filing: 14.01.1993
(51) Int. Cl.: H01G 9/02

(54) **Liquid electrolytes and electrolytic capacitors using the same**
Flüssige Elektrolyten und diese verwendende Elektrolytkondensatoren
Electrolytes liquides et condensateurs électrolytiques les utilisant

(30) Priority: 18.02.1992 JP 30332/92
(43) Date of publication of application: 25.08.1993
(73) Proprietor: MATSUSHITA ELECTRIC INDUSTRIAL CO., LTD., Kadoma-shi, Osaka-fu, 571 (JP)
(72) Inventor: Kurimoto, Hiroshi, Neyagawa-shi, Osaka (JP); Niibo, Nario, Neyagawa-shi, Osaka (JP)
(74) Representative: Woods, Geoffrey Corlett

(56) References cited:
- US-A- 4 469 610
- US-A- 4 747 021
- DATABASE WPI Section Ch, Week 8848, Derwent Publications Ltd., London, GB; Class E, AN 88340466
- PATENT ABSTRACTS OF JAPAN vol. 015, no. 240 (E-1079)20 June 1991

## Description

This invention relates to liquid electrolytes and also to electrolytic capacitors using the same.

Recent trends toward the miniaturization and high density packing of electronic devices and the demand for high reliability thereof require moderate to high voltage electrolytic capacitors which can be employed under higher temperature conditions with a more prolonged life. Liquid electrolytes used for this type of capacitor have been proposed, for example, in Japanese Patent Publication No. 52-8501. More particularly, in order to lower the value of tan 6 and to increase an allowable ripple current, there has been proposed an electrolyte which has ammonium benzoate dissolved in ethylene glycol. It is known that ammonium benzoate is unlikely to suffer degradation at elevated temperatures and can impart relatively high conductivity. However, such a driving electrolyte is so low in sparking voltage that the dielectric breakdown voltage becomes low.

This eventually may lead to degradation of characteristics such as capacitance and tan 6 at high temperatures and also to a high degree of generation of a gas. In the worst case, there arises the problem that the capacitor product becomes broken. If these electrolytes are used for high potential grade capacitors, terminal leads connected to capacitor elements will be broken owing to the corrosion thereof. This is because the sparking voltage is so low that long-term use is possible at high temperatures. In order to solve the problem, there have been proposed electrolytes which have carboxylic acids with a long side chain or salts thereof dissolved in ethylene glycol as set out in Japanese Laid-open Patent Application No. 2-224217. Although the driving electrolyte has a high sparking voltage, the conductivity is not so high as to be satisfied. In addition, waterproofing is poor, with the attendant problem that the leakage current is increased in high temperature and long-time use, thereby causing a gas to be generated in large amounts and the capacitor product to be broken.

US-A-4 747 021 describes an ethylene glycol based liquid electrolyte which comprises a mixed solute of i) benzoic acid and ii) an odd-numbered aliphatic saturated dibasic carboxylic acid.

It is accordingly an object of the invention to provide a liquid electrolyte for driving electrolytic capacitors which has high electric conductivity and high sparking voltage with good waterproofing properties.

It is another object to provide an electrolytic capacitor which comprises an electrolyte of the type mentioned above whereby the capacitor has low values of tan δ and leakage current without undergoing characteristic degradation at high temperatures and any appreciable change in appearance.

It is a further object of the invention to provide an electrolytic capacitor which has a prolonged life with good reliability.

According to the invention, there is provided a liquid electrolyte which comprises, in a solvent of ethylene glycol or of a mixture of ethylene glycol and up to 99 wt% based on the mixture of gamma-butyrolactone or dimethylformamide, a combination of:
(A) 1 to 20 wt%, based on the total composition, of a mixed solute of (i) at least one compound selected from benzoic acid and ammonium salts thereof and (ii) at least one compound selected from 1-methyl-1,7-heptanedicarboxylic acid, 1,7-dimethyl-1,7-heptanedicarboxylic acid, 1,3-dimethyl-1,3,9-nonanetricarboxylic acid and ammonium salts thereof, and
(B) up to 50 wt%, based on the total composition, of at least one alcohol selected from polyethylene glycol, polyvinyl alcohol, polyglycerine, glycerine, mannitol, sorbitol, dulcitol, xylitol and pentaerythritol.

The invention also provides an electrolytic capacitor which comprises a capacitor unit (C) including an anode electrode (1), a cathode electrode (2) and a separator (3) provided between the anode (1) and cathode (2) electrodes therewith, and a liquid electrolyte according to the invention impregnated in the capacitor unit. Preferably, the anode electrode, the cathode electrode and the separator are convolutely wound.

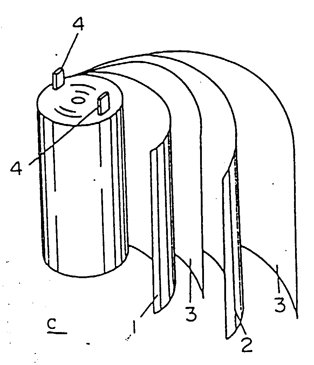

In the accompanying drawings, the sole figure is a schematic view perspective showing a capacitor unit of an electrolytic capacitor according to an embodiment of the invention.

The liquid electrolyte according to the invention comprises, in a solvent composed of ethylene glycol or of a mixture of ethylene glycol and up to 99 wt%, based on the mixture, γ-butyrolactone or dimethylformamide a mixed solute of benzoic acid or an ammonium salt thereof and at least one particular long-chain carboxylic acid having one or more side chains or an ammonium salt thereof.

Preferably, the solvent consists of ethylene glycol. Aside from ethylene glycol, γ-butyrolactone, dimethylformamide and the like may be added to ethylene glycol in amounts up to 99 wt% based on the total solvent.

The solute used in the present invention should comprise benzoic acid or an ammonium salt thereof. The salts may be ammonium, secondary ammonium, tertiary ammonium and quaternary ammonium salts and the like. Of these, ammonium benzoate is preferred.

The other essential ingredient of the solute is at least one long-chain carboxylic acid having a side chain or chains or an ammonium salt thereof. The long-chain carboxylic acid is:
1-methyl-1,7-heptanedicarboxylic acid,
1,7-dimethyl-1,7-heptanedicarboxylic acid, or
1,3-dimethyl-1,3,9-nonanetricarboxylic acid.

The salt may be an ammonium, secondary ammonium, tertiary ammonium or quaternary ammonium salt. Of these,
1-methyl-1,7-heptanedicarboxylic acid or its ammonium salt is preferred.

The mixing ratio by weight of (i) the benzoic acid or ammonium salt thereof and (ii) the at least one long-chain carboxylic acid or ammonium salt thereof is preferably in the range of 1:9 to 9:1.

The mixed solute is added to the solvent in an amount of from 1 to 20 wt% based on the total of the solute and the solvent. If the content is less than 1 wt%, the conductivity becomes too low. On the other hand, when the content exceeds 20 wt%, little increase of the conductivity by the addition of the solute is expected. Accordingly, the content is in the range of from 1 to 20 wt% based on the total composition.

The electrolyte of the invention exhibits a relatively high sparking voltage and has good waterproofing properties and ensures good chemical conversion properties as will be described with reference to the sole Figure.

The electrolyte further comprises at least one selected alcohol in order to further increase the sparking voltage. The at least one alcohol is selected from polyethylene glycol, polyvinyl alcohol, polyglycerine, glycerine, mannitol, sorbitol, dulcitol, xylitol, pentaerythritol and mixtures thereof. Polyethylene glycol, polyvinyl alcohol and polyglycerine which have usually a molecular weight ranging from 400 to 20,000 are typically used in the practice of the invention. The alcohol is added up to 50 wt% of the electrolytic composition. This is because if the concentration of the alcohol is too high, the solute may undesirably separate from the electrolyte at low temperatures.

Reference is now made to the sole Figure.

In the figure, there is shown a capacitor unit C which includes an anode foil 1 and a cathode foil 2 which are separated from each other through separators 3. The foils 1, 2 and the separator 3 are convolutely wound as shown in the figure. Indicated by 4 are leads. The foils 1, 2 are usually made of aluminium. The unit C is impregnated with the liquid electrolyte of the invention. The unit C may be encased, for example, in an aluminium case to complete an electrolytic capacitor.

Since benzoic acid or an ammonium salt thereof and a long-chain carboxylic acid having one or more side chains or an ammonium salt thereof are used as a solute, high electric conductivity and high sparking voltage are ensured. The long-chain carboxylic acids with one or more side chains have a steric hindrance structure and can thus suppress esterification reaction with ethylene glycol. As a result, it becomes possible that the electrolyte is unlikely to degrade at high temperatures and stably keeps its characteristics over a long time.

In general, when the anode foil 1 and the cathode foil 2 are convolutely wound along with the separators 3 at the time of fabrication of an electrolytic capacitor as shown in the figure, the oxide film formed on the anode foil 1 suffers defects. If benzoates alone are used as the solute, the benzoate is adsorbed on the anode foil 1 by interaction of π electrons of the phenyl group to protect the defects of the oxide film therewith, thereby imparting good waterproofing property. The adsorption of the benzoate correspondingly reduces the amount of the benzoate present in the electrolyte. By the reduction, the chemical conversion ability of the liquid electrolyte is lowered with a lowering of sparking voltage. Accordingly, the dielectric breakdown at the defects may not be avoided, thus leading to an increasing leakage current and a great degree of gas generation in the capacitor.

On the other hand, when only a long-chain carboxylic acid with one or more side chains is used as the solute of the electrolyte, the sparking voltage becomes high. However, because the long-chain carboxylic acid has not strong adsorptivity on the electrode foil at the carboxyl moiety. Hence, it is not possible to protect the defective portions of the anode foil. At the defective portions, there is eventually formed aluminium hydroxide, thereby causing the dielectric breakdown to occur, resulting in an increasing leakage current and a great degree of gas generation.

In the practice of the invention, both benzoic acid or an ammonium salt thereof and at least one selected long-chain carboxylic acid with one or more side chains or an ammonium salt thereof are contained in the electrolyte. In this type of electrolyte, the benzoic acid or ammonium salt thereof is selectively adsorbed on the surfaces of the anode foil 1 to protect the defects and impart good waterproofing property. On the other hand, the long-chain carboxylic acid with one or more side chains which is poorer in the adsorptivity is unlikely to adsorb on the anode surfaces but acts selectively as a solute in the electrolyte. This makes it possible to impart good chemical conversion properties and keep a relatively high sparking voltage.

Thus, the electrolyte of the invention can provide an aluminium electrolytic capacitor which has not only high electric conductivity and a high sparking voltage, but also good waterproofing properties with low values of tan 6 and leakage current. In addition, the capacitor exhibits stable characteristics over a long time at high temperatures.

Moreover, the alcohols defined hereinbefore cause the sparking voltage to be further increased with more stable characteristics over a long time at high temperatures.

The following Examples illustrate the invention. Comparative Examples are provided.

### Examples 1 to 13 and Comparative Examples

Liquid electrolytes having compositions indicated in the following Table were prepared and used to fabricate aluminium electrolytic capacitors of the type shown in the sole Figure. Each capacitor was subjected to measurements of electric conductivity and sparking voltage at 30°C.

The results are shown in the Table.

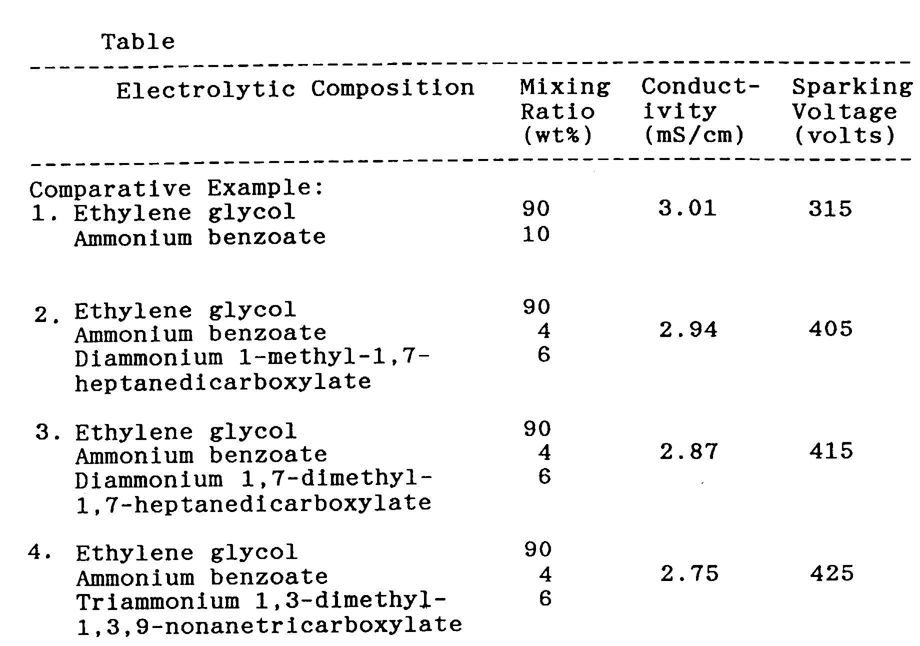

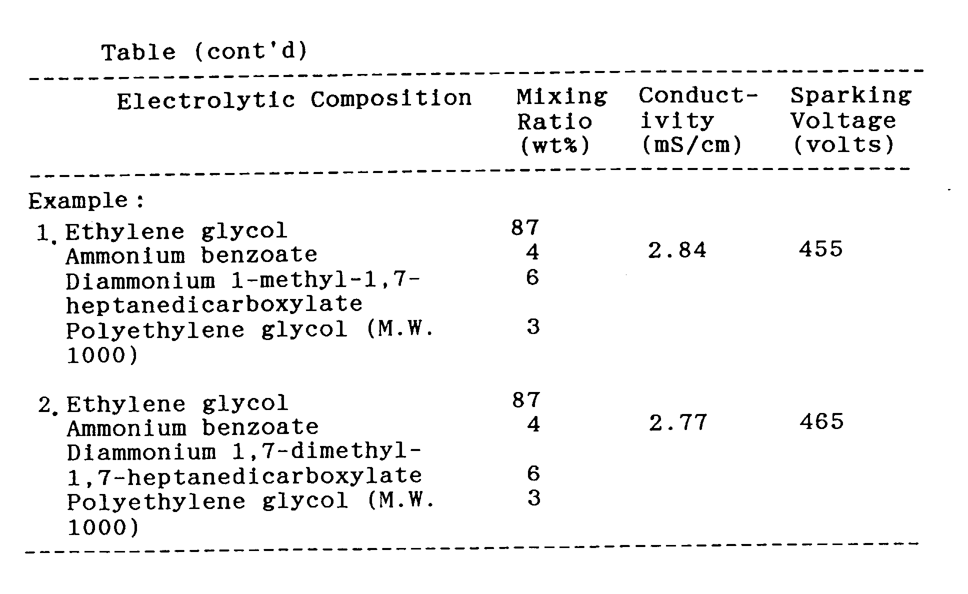

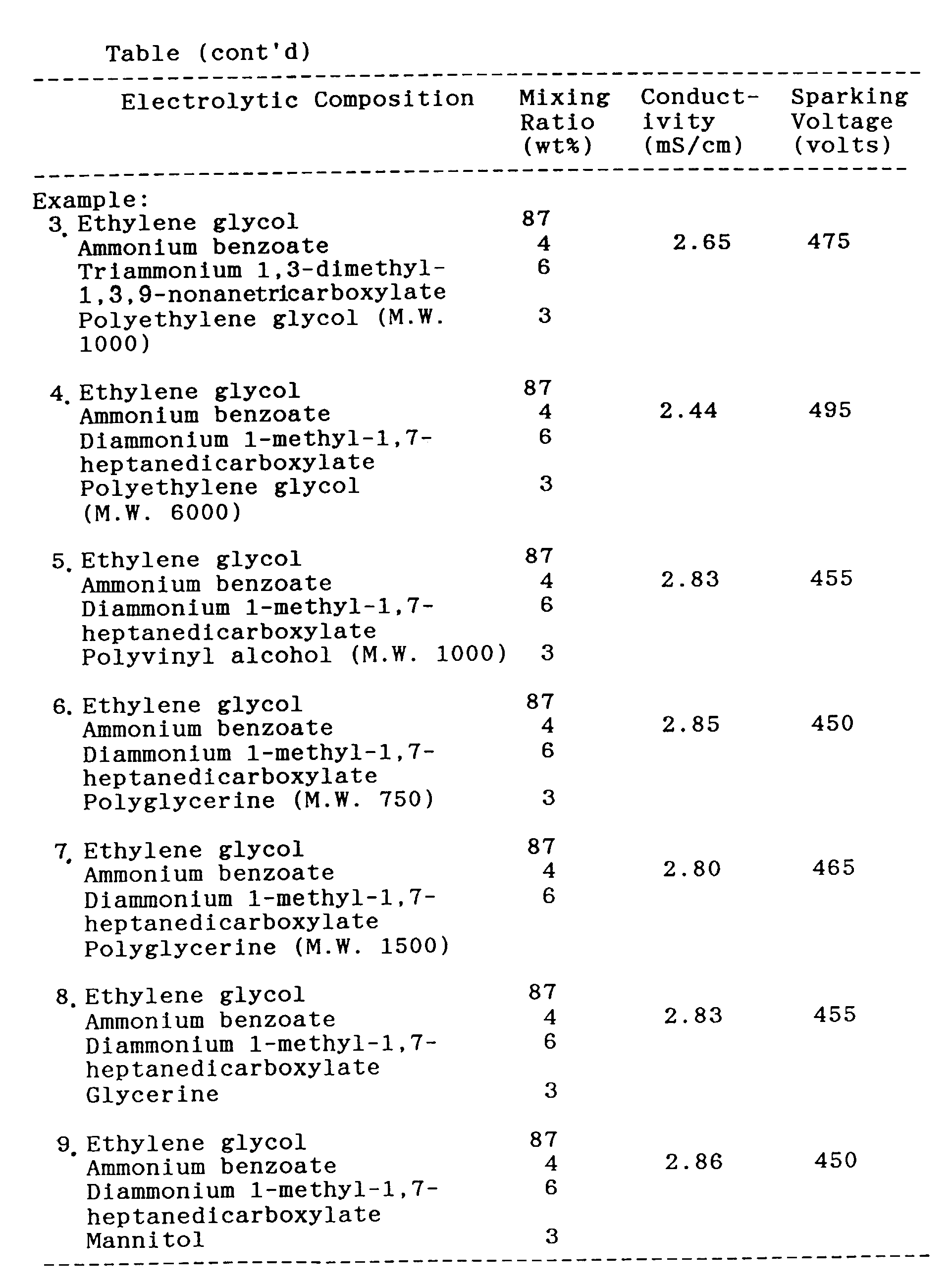

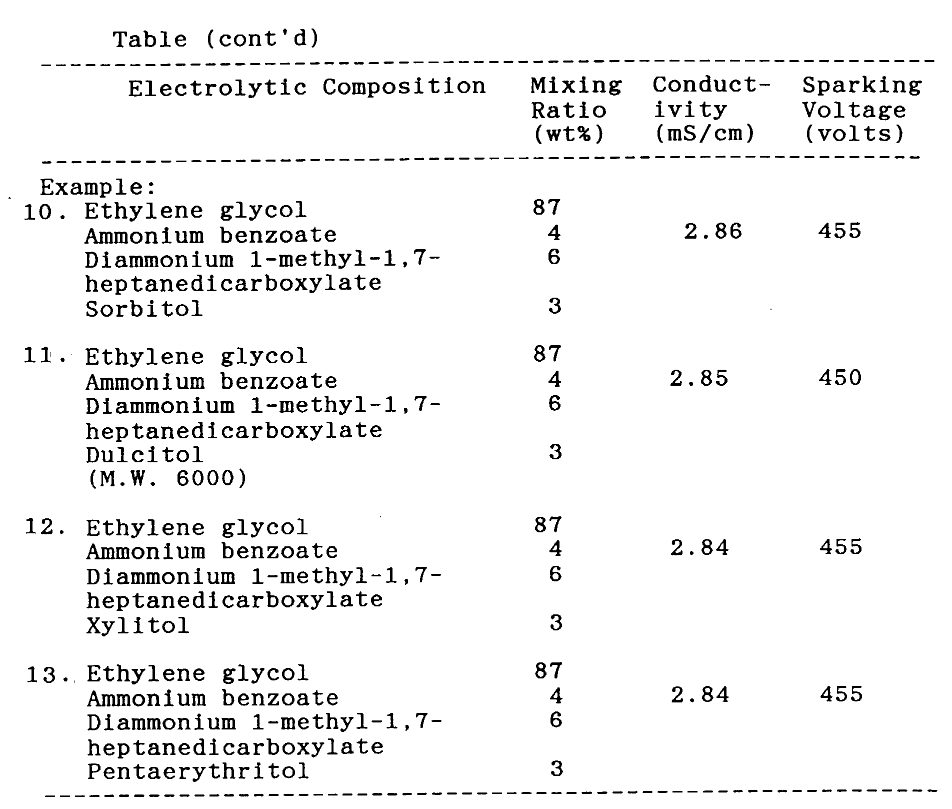

As will be apparent from the results of Examples 1 to 13, the capacitors using the electrolytes which contain the benzoate, the long-chain carboxylate with one or more side chains and an alcohol exhibit high electric conductivity and high sparking voltage. Since the long-chain carboxylates with the side chain or chains have a steric hindrance structure, the esterification reaction with ethylene glycol can be suppressed. As a result, the capacitors are unlikely to be degraded at high temperatures and are able to keep the characteristics over a long time. Moreover, the presence of the alcohol causes the sparking voltage to be further increased.

In the foregoing Examples, although particular ammonium salts are used for both solute ingredients, the corresponding acids or other ammonium salts will give similar results.

## Claims

1. A liquid electrolyte which comprises, in a solvent of ethylene glycol or of a mixture of ethylene glycol and up to 99 wt% based on the mixture of gamma-butyrolactone or dimethylformamide, a combination of:
(A) 1 to 20 wt%, based on the total composition, of a mixed solute of (i) at least one compound selected from benzoic acid and ammonium salts thereof and (ii) at least one compound selected from 1-methyl-1,7-heptanedicarboxylic acid, 1,7-dimethyl-1,7-heptanedicarboxylic acid, 1,3-dimethyl-1,3,9-nonanetricarboxylic acid and ammonium salts thereof, and
(B) up to 50 wt%, based on the total composition, of at least one alcohol selected from polyethylene glycol, polyvinyl alcohol, polyglycerine, glycerine, mannitol, sorbitol, dulcitol, xylitol and pentaerythritol.

2. A liquid electrolyte according to claim 1 wherein (i) is ammonium benzoate or is benzoic acid.

3. A liquid electrolyte according to claim 1 or 2, wherein (ii) is 1-methyl-1,7-heptanedicarboxylic acid or is diammonium or ammonium 1-methyl-1,7-heptanedicarboxylate.

4. A liquid electrolyte according to any one of the preceding claims wherein the weight ratio of (i) to (ii) is 1:9 to 9:1.

5. An electrolytic capacitor which comprises a capacitor unit (C) including an anode electrode (1), a cathode electrode (2) and a separator (3) provided between the anode (1) and cathode (2) electrodes therewith, and a liquid electrolyte as claimed in any one of the preceding claims impregnated in the capacitor unit.

6. An electrolytic capacitor according to claim 5, wherein the anode electrode (1) and the cathode electrode (2) are both in the form of a foil made of Al, and the anode electrode (1), the cathode electrode (2) and the separator (3) are convolutely wound.

## Patentansprüche

1. Flüssiger Elektrolyt, der in einem Lösungsmittel aus Ethylenglycol oder aus einer Mischung aus Ethylenglycol und bis zu 99 Gew.-%, auf die Mischung bezogen, γ-Butyrolacton oder Dimethylformamid eine Kombination aus:
(A) 1 bis 20 Gew.-%, bezogen auf die Gesamt-Zusammensetzung, eines gelösten Stoffgemischs aus (i) mindestens einer Verbindung, ausgewählt aus Benzoesäure und Ammoniumsalzen der Benzoesäure und (ii) mindestens einer Verbindung, ausgewählt aus l-Methyl-1,7-heptandicarboxylsäure, 1,7,-Dimethyl-1,7-heptandicarboxylsäure, 1,3-Dimethyl-1,3,9-Nonantricarboxylsäure und Ammoniumsalzen dieser Säuren, und
(B) bis zu 50 Gew.-%, bezogen auf die Gesamt-Zusammensetzung, von mindestens einem Alkohol, ausgewählt aus Polyethylenglycol, Polyvinylalkohol, Polyglyzerin, Glyzerin, Mannitol, Sorbitol, Dulcitol, Xylitol und Pentaerythritol umfaßt.

2. Flüssiger Elektrolyt nach Anspruch 1, worin (i) Ammoniumbenzoat oder Benzoesäure ist.

3. Flüssiger Elektrolyt nach Anspruch 1 oder 2, worin (ii) 1-Methyl-1,7-heptandicarboxylsäure oder Diammonium- oder Ammonium-1-methyl-1,7-heptandicarboxylat ist.

4. Flüssiger Elektrolyt nach einem der vorhergehenden Ansprüche, worin das Gewichtsverhältnis von (i) zu (ii) 1:9 bis 9:1 ist.

5. Elektrolytkondensator, der eine Kondensatoreinheit (C) mit einer Anodenelektrode (1), einer Kathodenelektrode (2) und einem Trennelement (3), das zwischen der Anodenelektrode (1) und der Kathodenelektrode (2) bereitgestellt ist, und einen flüssigen Elektrolyten nach einem der vorhergehenden Ansprüche umfaßt, mit dem die Kondensatoreinheit getränkt ist.

6. Elektrolytkondensator nach Anspruch 5, bei dem die Anodenelektrode (1) und die Kathodenelektrode (2) beide in der Form einer aus Aluminium hergestellten Folie vorliegen und die Anodenelektrode (1), die Kathodenelektrode (2) und das Trennelement (3) Übereinandergerollt gewickelt sind.

## Revendications

1. Electrolyte liquide qui comprend, dans un solvant composé par l'éthylèneglycol ou un mélange d'éthylèneglycol et au plus 99 % en poids, par rapport au mélange, de γ-butyrolactone ou de diméthylformamide, une combinaison constituée par :
(A) de 1 à 20 % en poids, par rapport à la composition totale, d'un soluté mixte de (i) au moins un composé choisi parmi l'acide benzoique et leurs sels d'ammonium et (ii) au moins un composé choisi parmi les acide 1-méthyl- 1,7-heptanedicarboxylique, acide 1,7-diméthyl-1,7-heptanedicarboxylique, acide 1,3-diméthyl-1,3,9-nonanetricarboxylique et leurs sels d'ammonium, et
(B) jusqu'à 50 % en poids, par rapport à la composition totale, d'au moins un alcool choisi parmi les polyéthylèneglycol, poly(alcool de vinyle), polyglycérine, glycérine, mannitol, sorbitol, dulcitol, xylitol et pentaérythritol.

2. Electrolyte liquide conforme à la revendication 1, dans lequel (i) est le benzoate d'ammonium ou l'acide benzoïque.

3. Electrolyte liquide conforme à la revendication 1 ou 2, dans lequel (ii) est l'acide 1-méthyl-1,7-heptanedicarboxylique ou le 1-méthyl-1,7-heptanedicarboxylate d'ammonium ou de diammonium.

4. Electrolyte liquide conforme à l'une quelconque des précédentes revendications, dans lequel le rapport pondéral de (i) à (ii) vaut de 1:9 à 9:1.

5. Condensateur électrolytique qui comprend un ensemble condensateur (C) englobant une électrode d'anode (1), une électrode de cathode (2) et un séparateur (3) disposé entre les électrodes d'anode (1) et de cathode (2), et un électrolyte liquide conforme à l'une quelconque des précédentes revendications imprégnant l'ensemble condensateur.

6. Condensateur électrolytique conforme à la revendication 5, dans lequel l'électrode d'anode (1) et l'électrode de cathode (2) se trouvent toutes les deux sous la forme d'une feuille de A1 et, l'électrode d'anode (1), l'électrode de cathode (2) et le séparateur (3) sont enroulés les uns sur les autres.
